Europäisches Patentamt

(19) European Patent Office

Office européen des brevets

(11) **EP 0 504 476 B1**

## (12) EUROPEAN PATENT SPECIFICATION

(45) Date of publication and mention
of the grant of the patent:
**19.02.1997 Bulletin 1997/08**

(51) Int. Cl.$^6$: **B01D 53/34**, B01D 53/60,
B01D 53/83, B01D 53/90,
B01D 53/96

(21) Application number: **91118046.1**

(22) Date of filing: **23.10.1991**

(54) **Regenerative process and system for the simultaneous removal of particulates and the oxides of sulfur and nitrogen from a gas stream**

Regenerationsverfahren und Vorrichtung zur simultanen Entfernung von Teilchen und Schwefel- und Stickoxiden aus einem Gasstrom

Procédé et dispositif régénérateur pour l'élimination simultanée de particules et d'oxydes de soufre et d'azote d'un courant gazeux

(84) Designated Contracting States:
**BE DE DK ES FR GB IT LU NL SE**

(30) Priority: **21.03.1991 US 672999**

(43) Date of publication of application:
**23.09.1992 Bulletin 1992/39**

(73) Proprietor: **General Electric
Environmental Services, Inc.
Lebanon Pennsylvania 17042 (US)**

(72) Inventors:
• **Cohen, Mitchell R.
Troy, New York 12180 (US)**

• **Gal, Eli
Lititz, Pennsylvania 17543 (US)**

(74) Representative: **Szary, Anne Catherine et al
London Patent Operation,
GE International, Inc.,
Essex House,
12-13 Essex Street
London WC2R 3AA (GB)**

(56) References cited:
**EP-A- 0 268 353          US-A- 4 640 825
US-A- 4 915 920**

## Description

Background of the Invention

This invention relates to a process and apparatus for reducing the concentration of pollutants contained in a gaseous mixture, and more particularly, to a process and apparatus for the removal of particulate matter and the oxides of nitrogen and sulfur from a gaseous mixture, as well as the regeneration and recycling of spent sorbent used to remove the oxides of sulfur from the gaseous mixture.

Particulate matter and the oxides of sulfur and nitrogen result from the combustion or air oxidation of carbon-containing materials, such as coal, fuel oil and the like, and are responsible for major amounts of pollution in our environment. Currently, the commercially available processes and systems for the removal of oxides of sulfur and nitrogen and particulate matter from combustion gases resulting from the combustion or air oxidation of coal or fuel oil in power plants are generally very expensive to build and to operate. The removal of each contaminant requires a large scale system and produces large quantities of waste.

A large number of processes and systems have also been proposed in the literature, including the processes and systems discussed in U.S. Patent Nos. 3,501,897; 3,776,854; 3,816,597; 3,840,643; 3,966,879; 4,101,634; 4,164,546; 4,170,627; 4,192,855; 4,193,972; 4,258,020; 4,609,537; 4,692,318; 4,744,967 and 4,851,202. In the foregoing references, either $SO_2$ is removed; or $NO_x$ is removed; or $SO_2$ and $NO_x$ as well as particulate matter are removed from combustion gases, usually by using solid sulfur oxide acceptors and/or ammonia gas. In certain instances, it is also known to regenerate the spent or loaded sulfur oxide acceptor by various means as described in EP-A-0 268 353 and U.S. Patent Nos. 3,501,897; 3,776,854; 3,778,501; 3,846,536; 4,001,376; 4,101,634; 4,164,546; 4,192,855; 4,609,537 and 4,692,318. In many of the references, the solid sulfur oxide acceptor is used in the form of a moving bed, a fluidized bed, a fixed bed or in a "parallel passage" reactor, and both the removal of sulfur oxides with solid sulfur oxide acceptor and the regeneration of the spent or loaded solid sulfur oxide acceptor are inefficient, inadequate and/or expensive.

In most instances in the prior art, copper, copper oxide or a mixture thereof is coated on alumina or impregnated in alumina to form solid sorbents for the removal of sulfur dioxide from gases. In U.S. Patent No. 3,966,879, sulfur oxides and particulate matter are removed from waste gases in the same processing zone under the reaction conditions required for sulfur oxide acceptance in a moving bed which contacts the waste gas stream in cross-current fashion.

The reduction of the nitrogen oxides ($NO_x$), both NO and $NO_2$, to free nitrogen with ammonia in the presence of a copper oxide-containing catalyst is described in U.S. Patent No. 4,101,634 where it is also indicated that the conversion of nitrogen oxides with the simultaneous removal of sulfur oxides by means of a copper-containing acceptor proves not to exceed 70 percent.

In U.S. Patent No. 4,101,634 sulfur oxides and nitrogen oxides are removed simultaneously by use of a metal-containing acceptor with continuous addition of ammonia or precursor thereof with some improvement in efficiency when the metal-containing acceptor is regenerated at regular intervals by a reducing gas passed counter-currently in the bed; the regeneration is terminated at the moment when at least some of the acceptor is still in the sulfate form; and the oxygen-containing gas stream to be purified is then re-contacted with the acceptor with the simultaneous addition of ammonia or precursor.

In U.S. Patent No. 4,164,546, nitrogen oxides are removed from a gaseous mixture containing nitrogen oxides and oxygen by addition of ammonia thereto and by contacting with a suitable catalyst for the nitrogen-ammonia reaction wherein best results are achieved when sulfur dioxide is also present in the gaseous mixture and wherein excess sulfur dioxide is separated prior to the nitrogen oxide conversion, simultaneously therewith or subsequent thereto. In U.S. Patent No. 4,164,546, fixed beds of the contact mass, such as copper oxide on alumina are preferred for effective removal of both sulfur dioxide and nitrogen oxide with regeneration by a reducing gas such as hydrogen, methane, ethane, propane and the like. Further, in U.S. 4,164,546, it is indicated that the flue gas may contain small amounts of finely-divided suspended particulate matter such as fly ash.

In U.S. Patent No. 4,193,972, sulfur dioxides are removed from a gas stream by the use of a metal-containing regenerable acceptor and nitrogen oxides contained in the gas stream are reduced to nitrogen gas in a parallel passage vapor-solids contactor which is conventional for processing gas streams containing particulate matter, such as fly ash, and wherein the reduction of nitrogen oxides to nitrogen is catalyzed by copper sulfate on alumina. In U.S. 4,193,972, the reduction of nitrogen oxides to nitrogen may be carried out simultaneously with the acceptance of sulfur oxides on copper-containing acceptors, and the reaction may be preceded by the admixture of ammonia into the gas stream being treated.

Although regenerative processes wherein spent or loaded solid acceptor used to absorb sulfur dioxide from gas streams is regenerated in processes and systems for the simultaneous removal of sulfur dioxide, $NO_x$ and particulate matter from gas streams are well-known, the processes and systems remain disadvantageous because they are inefficient, require high capital investment when utilized in large scale systems and are expensive to operate in large plants, such as power plants which utilize combustible coal or fuel oil. Even though a certain amount of waste has been eliminated by the foregoing prior art regenerative processes, none of the emerging processes and systems discussed above have gained a wide industrial acceptance due to their high cost and complexity.

## Summary of the Invention

In view of the fact that pollution of our environment with gaseous mixtures containing particulate matter and the oxides of sulfur and nitrogen remains a problem, it is desirable to improve the efficiency of the removal of particulate matter and the oxides of sulfur and nitrogen from gas streams and to reduce capital cost of and expense of operating large scale systems dedicated to providing clean air. Accordingly, it is desirable to provide a regenerative process and system for the efficient and simultaneous removal of particulate matter and the oxides of sulfur and nitrogen from gases containing these pollutants.

Generally, the present invention is defined by an apparatus and process in which particulate matter, sulfur oxides and nitrogen oxides are removed simultaneously by use of a metal-containing acceptor, with continuous addition of ammonia, or precursor thereof, and the sulfur oxide acceptor is regenerated continuously or at regular intervals (intermittently) by a reducing gas or by thermal decomposition. In one aspect, the process is characterized in that the regeneration of the loaded sulfur oxide acceptor is effected by passing reducing gas through a fluidized loaded sulfur oxide acceptor bed to form regenerated acceptor. The gas stream to be purified is then contacted with the regenerated acceptor in an entrained bed with the addition of ammonia or ammonia precursor.

In accordance with the present invention, a highly efficient process and apparatus for the simultaneous removal of particulate matter and the oxides of sulfur and nitrogen has been achieved by using a finely-divided solid acceptor for the oxides of sulfur on a suitable porous carrier, and by simultaneously using ammonia gas or a precursor thereof for the oxide of nitrogen, followed by filtration. The solid acceptor for sulfur oxides on a suitable carrier must be used in a reactor wherein an entrained bed of the solid acceptor for sulfur oxides is formed, that is, a reactor capable of forming an entrained bed of the finely-divided solid sorbent for the oxides of sulfur in a gas stream, such as a combustion exhaust gas stream. A finely-divided solid sorbent on a suitable porous carrier is highly reactive and requires a very short contact time to absorb the oxides of sulfur and to reduce the oxides of nitrogen in the presence of ammonia gas when used in the reactor capable of forming an entrained bed of the finely-divided sorbent in the gas stream. The process and apparatus of the present invention is highly efficient because the finely-divided solid acceptor for sulfur oxides is incorporated in and/or dispersed on a porous carrier material having a particle size of about 20 $\mu m$ (microns) to about 200 $\mu m$ (microns). It is the critical combination of using the finely-divided sorbent and the highly porous carrier material which imparts high efficiency to the capacity of the sorbent to remove sulfur oxides from a gas stream when the sorbent is merely entrained in a stream of the gas to form an entrained bed.

In one aspect of the present invention, there is provided a process for simultaneously removing from a combustion exhaust stream, sulfur oxides by means of a solid sulfur oxide acceptor on a porous carrier, nitrogen oxides by means of ammonia gas and particulate matter by means of filtration and for regenerating loaded solid sulfur oxide acceptor, the process comprising the steps as delineated in claim 1, with preferred features as delineated in claims 2-12.

The relatively fine particles of the particulate matter from the classifier as defined in step c1 are carried in a stream of gas and filtered to separate a second clean gas from the relatively fine particles of particulate matter, and the clean gas is passed to exhaust in an exhaust gas stream. The relatively fine particles of particulate matter which consist primarily of fly ash, are waste and are sent to disposal. Optionally, the filtration solids can be heated by air in the classifier, which heated air is used as a stream of gas to carry the loaded solid sulfur oxide acceptor to the regenerator and/or the fine particles of particulate matter to a filter after which the heated air passes as the stream of exhaust gas through the optional air preheater and thereafter to the exhaust gas stream.

In another aspect of the present invention, there is provided an apparatus for simultaneously removing from a combustion exhaust gas stream, particulate matter by means of a filter, oxides of nitrogen by means of ammonia gas and sulfur oxides by means of a solid sorbent on a porous carrier, and for regenerating the spent solid sorbent on a porous carrier, comprising the equipment as delineated in claim 13, with preferred embodiments as delineated in claims 14-24.

As used herein, the terms "sorbent", "acceptor", "solid sulfur oxide acceptor" and "solid sulfur dioxide acceptor" are interchangeable and define a solid substance which is capable of binding a gas or a gaseous compound either physically or chemically, and such sorbents may comprise a porous carrier on which one or more metals and/or metal compounds have been deposited, for example, copper and/or copper oxide supported on porous alumina. A loaded or spent sorbent is one which has absorbed and/or reacted with the oxides of sulfur and includes sorbent in which the absorption and/or reaction capacity is either totally or partially expended. Loaded or spent sulfur oxide acceptor may include unreacted acceptor or acceptor which still has absorption capacity, mixed with the loaded or spent acceptor, and as used herein, the terms "loaded" or "spent" sulfur oxide include such acceptor material. In accordance with the present invention, when the sorbent is entrained in a stream of gas which contains an oxide of sulfur, such as sulfur dioxide, the sorbent depletes sulfur dioxide in the gas.

As used herein, the terms "oxides of sulfur", "sulfur oxide" and "sulfur dioxide" mean sulfur dioxide and/or sulfur trioxide and such terms may be used interchangeably. The terms "nitrogen oxide", "oxides of nitrogen" and "NO$_x$", as used herein, mean nitric oxide and/or nitrogen dioxide and may be used interchangeably.

As used herein, the term "particulate matter" or "particulates" refers to the conventional particulate matter emitted from the combustion of coal, fuel oil and other fossil fuels and hydrocarbons as well-known in the art and include emissions from power plants, steel mills, waste treatment sites, and the like. Particulate matter usually contains ash, for example, fly ash, and/or other material.

As used herein, clean gas is gas which has been treated in the process or system of the present invention and is partially or totally depleted in particulate matter and the oxides of sulfur and nitrogen.

As used herein, entrained bed reactor is a vessel, duct or pipe carrying the mixture of sorbent entrained in the gas stream.

By the present invention, there is provided an efficient and cost effective regenerative process and system for the simultaneous removal of particulate matter and the oxides of sulfur and nitrogen from combustion exhaust gas streams.

Other advantages of the process and system of the present invention will be apparent from the accompanying drawings and the following detailed description of the invention.

Brief Description of the Drawings

Figure 1 represents a diagrammatic representation of the system of the present invention.

Figure 2 is a graph showing sulfur dioxide emission versus time for a copper oxide/alumina sorbent through which sulfur dioxide-containing gas was passed at three different velocities at a temperature of 700°F (371°C).

Figure 3 is a graph showing sulfur dioxide removal efficiency versus time for a copper oxide/alumina sorbent used to treat a combustion gas from a diesel engine, the gas containing 210 ppm sulfur dioxide.

Detailed Description of the Invention

The process and apparatus of the present invention can be used for the simultaneous removal of particulate matter and oxides of sulfur and nitrogen contained in a gas stream or mixture of gases. Typical gas streams containing particulate matter and the oxides of sulfur and nitrogen are well-known in the art, many examples of which are described in the references cited above.

The solid sorbent used in the process and apparatus of the present invention is critical and must be a sorbent which is highly reactive so that it will require a very short contact time to absorb sulfur dioxide and to reduce nitrogen oxide in the presence of ammonia gas derived directly from ammonia gas or an ammonia gas precursor, examples of which are well-known in the art.

The solid sorbent must be used in conjunction with a porous support or carrier material, for example, porous alumina and/or porous silica. In accordance with the present invention, the solid sorbent must be coated on or otherwise associated with the surface or impregnated into the body or core, or both, of a porous support or carrier material, for example, a catalytic grade support wherein the porous support or carrier has a particle size of about 20 μm (microns) to about 200 μm (microns).

Typical sorbents on typical porous carriers are well-known in the art and are described, for example, in U.S. Patent Nos. 3,501,897; 3,776,854; 3,816,597; 3,840,643; 4,001,376; 4,170,627; 4,192,855; 4,258,020; 4,609,537; 4,692,318; and Re. 29,771. Typical methods of making sorbents on porous carrier materials, typical sorbents, typical additives or promoters which act in combination with the sorbent, typical porous carrier materials, typical surface areas and the like are described in the foregoing references.

In preferred embodiments of the present invention, the solid sulfur oxide acceptor or solid sorbent is copper, copper oxide or a mixture thereof coated on and/or impregnated in porous alumina powder, preferably porous activated or gamma alumina. The porosity of the sorbent is generally a function of the porosity of the support or carrier material, which in turn is a factor in reactivity wherein the solid sorbent requires only a very short contact time to absorb sulfur oxides and to reduce oxides of nitrogen in the presence of ammonia gas carried in a gas stream in which the solid sorbent on a porous carrier, is entrained. Thus, in accordance with the present invention, the sorbent is highly reactive to promote the use of a reactor capable of forming an entrained bed of sorbent in a gas stream, for example, a combustion exhaust gas stream, such as a flue gas stream from a power plant.

Porosity of the carrier or support material for the sulfur oxide sorbent of the present invention is critical and must be sufficient so that the resulting sorbent supported or carried thereby has sufficient reactivity to deplete sulfur oxides from a gas stream in an entrained bed reactor. The porous carrier or support material, for example, activated alumina, has a high surface area of from about 50 m$^2$/gm. to about 500 m$^2$/gm. Although porous alumina is the preferred support or carrier material, and activated or gamma-alumina are the most preferred support or carrier materials in accordance with the present invention, examples of other refractory inorganic oxides include silica, zirconia, boria, thoria, magnesia, titania, chromia and the like, or composites thereof. Naturally occurring materials, such as, for example porous clays and silicates such as fuller's earth, attapulgus clay, feldspar, halloysite, montmorillonite, kaolin, and diatomaceous earth, frequently referred to as siliceous earth, diatomaceous silicate, kieselguhr, and the like, and the naturally occurring material may or may not be activated prior to use by one or more treatments including drying, calcining, steaming and/or acid treatment. As indicated above, the carrier or support material must be of a porous nature, that is, have a high surface area, to promote high reactivity of the sorbent so that it can be used in an entrained bed reactor, and it must be capable of supporting or carrying the sulfur oxide acceptor or solid sorbent material.

The porosity of carrier bodies is well-known and described, for example, in U.S. Patent No. 3,776,854. Many carrier bodies are already porous, however porosity can be increased by adding pore-forming agents to the starting materials prior to forming the material into the desired shape and calcining the shaped material at a temperature, for example, above about 780°C.

The shape of the porous carrier or support material is not critical, however, because of the criticality of the small size of the porous carrier or support material, that is about 20 $\mu$m (microns) to about 200 $\mu$m (microns), only fine particles or very small shaped particles (finely-divided particles) can be used as porous carrier or support material in accordance with the present invention.

Typical sulfur oxide acceptors or solid sorbents are described in the above-cited references, and include, for example, in addition to copper, copper oxide or a mixture thereof, an alkali metal compound, such as potassium oxide or sodium oxide, promoted with a vanadium compound, such as vanadium oxide or vanadium pentoxide, or any other metal or metal oxide which is capable of binding sulfur oxides as, for example, sulfate, and which can be regenerated, for example, by means of a reducing gas. Naturally, there must be no adverse reaction between the sorbent material and/or the porous carrier or support material, the ammonia gas, the ammonia gas precursor, or any other components (other than sulfur oxides) used in the process and the system of the present invention.

Although any sorbent on a porous carrier, including any metal or metal oxide on a porous carrier, which is an acceptor for sulfur oxides and which is capable of binding or reacting with sulfur oxides, and which is capable of being regenerated, after it becomes spent, loaded or deactivated, for example, which may be regenerated by means of a reducing gas, or thermal energy, may be used in the process and system of the present invention, the process and system will be discussed herein with reference specifically to copper-containing sulfur oxide acceptors, for example, copper oxide acceptors, on porous, activated alumina.

The amount of sorbent on the porous carrier material and/or impregnated in the porous carrier material is not critical as long as there is a sufficient amount of the sorbent, for example, metal or metal oxide, to remove the oxides of sulfur from the gas stream while the sorbent on the porous carrier is entrained in the gas stream and while the sorbent on the porous substrate is being collected on the filter downstream of the reactor. When the sorbent is copper and/or copper oxide on a porous alumina support, the copper content of the sorbent can, partly depending on the specific surface area of the material used, vary within wide limits. As a rule it is from about 0.1 to about 15 percent by weight based on finished sorbent. Optimum results are obtained with sorbents which contain from about 4 to about 10 percent by weight of copper. As indicated above, the porous carrier material is preferably an activated alumina such as gamma-alumina, an alumina such as alpha-alumina, or a mixture of gamma- and alpha-alumina, although in principle all solids are eligible which are temperature resistant and are not corroded by sulfur oxides and nitrogen oxides under the prevailing conditions.

When copper oxide is the sorbent, the reactions which take place in the process and system of the present invention, with $SO_2$ and $NO_x$ in the presence of ammonia gas are well-known and clearly described in the prior art, for example, flue gas from a combustion source, which ordinarily contains sulfur dioxide, sulfur trioxide, the oxides of nitrogen, primarily nitric oxide (NO), and particulate matter, as well as oxygen, react with the copper oxide to absorb $SO_2$ as shown in equation (1) below.

$$2CuO + 2SO_2 + O_2 \rightarrow 2CuSO_4 \qquad (1)$$

The copper sulfate formed in equation (1) is regenerated, for example, by a reducing gas such as methane, as shown in equation (2), and the copper which is formed during the reductive regeneration, is oxidized to copper oxide by oxygen derived from the flue gas and/or from air added to the process or system as shown in equation (3).

$$2CuSO_4 + CH_4 \rightarrow 2Cu + 2SO_2 + CO_2 + 2H_2O \quad (2)$$

$$2CU + O_2 \rightarrow 2CUO \qquad (3)$$

Copper sulfate is also thermally decomposed at temperatures greater than about 600°C as shown in equation (4).

$$CuSO_4 \overset{}{-\!\!(> 600C)} \rightarrow CuO + SO_2 + 1/2\, O_2 \quad (4)$$

As well-known in the art, the sulfur dioxide produced during the regeneration step as shown in equations (2) and (4) results in a sulfur dioxide rich gas, containing, for example, about 10% to about 40% by volume sulfur dioxide in air, which in turn can be recovered and converted by known methods to elemental sulfur and/or sulfuric acid.

The oxides of nitrogen, such as nitric oxide, are reduced by ammonia gas as shown in equation (5) where copper oxide and/or copper sulfate act as catalyst to the nitric oxide reduction, and nitrogen gas and water are formed from the reduction.

$$6NO + 4NH_3 \overset{}{-\!\!(CuO/CuSO_4)} \rightarrow 5N_2 + 6H_2O \quad (5)$$

Nitrogen gas and water are carried by the clean gas stream to exit the system.

Sorbents comprising copper and/or copper oxide preferably supported on porous alumina as a carrier are very suitable for the removal of sulfur oxides from gases under oxidative conditions at temperatures above 500°F (260°C), conditions which are normally found in exhaust gases. Under the conditions in which the sulfur dioxide is chemically bound by the sorbent, sulfur trioxide is also removed from the gases.

The amount of ammonia gas or ammonia gas precursor injected into the gas stream is not critical as long as there is a sufficient amount of ammonia gas in the gas stream to reduce and preferably completely deplete, the $NO_x$ content of the gas stream. For the reduction of nitrogen oxides in the gas stream, ammonia in a quantity of about 0.1 to 2.0 times the requisite stoichiometric quantity is supplied to the gas to be treated. In preferred embodiments, the ammonia gas used in the gas stream is from about a 0.1:1 to about a 2.5:1 and preferably a 1.1:1 mole ratio with the nitrogen oxides content of the gaseous mixture.

According to the process and apparatus of the invention, substantial quantitative reduction of $NO_x$ can be achieved. Ammonia is generally not detected in the flue gases treated. Instead of gaseous ammonia it is also possible to add precursors of ammonia, such as an aqueous solution of ammonia, or a ammonium carbonate solution, urea, hydrazine, ethylene diamine or hexamethylene diamine.

For the process and apparatus of the present invention to be economical, it is necessary that the sorbent on a porous carrier be capable of regeneration a substantial number of times without loss of activity and stability, for example, a sorbent should be capable of regeneration many times with only 1 percent (by weight) or less addition of fresh sorbent on a porous carrier to make-up for losses and/or reduced activity.

The regenerator may be any conventional type of reactor, including fixed bed, moving bed, fluidized bed and the like. In accordance with the present invention, the fluidized bed type of regenerator is preferred wherein the hot regenerating gas or gases or hot air and the like are injected into a fluidized bed. The regeneration under reducing conditions typically takes place at a temperature as low as about 600°F (315°C) to about 1200°F (648°C), however, in certain preferred embodiments, the regeneration may take place in heated air at temperatures over about 1200°F (648°C), and more preferably, about 1200°F (648°C) to about 1800°F (982°C).

The regeneration of sorbents of the present invention, may be achieved by any of the systems and processes known in the art. Conventional reducing gases, such as methane, ethane, propane and the like, may be used, or a reducing gas, such as hydrogen, carbon monoxide or a hydrogen-containing gas diluted with steam, may be used. Hydrocarbon-containing gases, such as the off-gas from a catalytic reformer, are also suitable for the regeneration of sulfur oxide loaded metal-containing catalysts. Suitable hydrogen- and CO-containing gases may be obtained by partial oxidation or steam-reforming of hydrocarbons and from coal gasifiers.

The gas stream or mixture of gases which may be treated in the process and system of the present invention may be derived from any suitable source from a combustion exhaust gas stream, which contains particulate matter, oxides of nitrogen and sulfur oxides.

Although the compositions of gas streams and mixtures of gases vary widely, depending on the particular source of the gas stream, typically such exhaust gases contain between 500 and 10,000 ppmv $SO_2$ and between about 100 and 2,000 ppmv nitrogen oxide, calculated as NO. In addition to $SO_2$ and nitrogen oxides, the exhaust gases contain nitrogen, water vapor and $CO_2$ as well as residual oxygen.

The combustion exhaust gas stream forming the entrained bed of solid sulfur oxide preferably has a velocity of about 0.5 ft. (0.152m)/sec. to about 20 ft. (6.1m)/sec. to form the entrained bed of solid surface oxide therein.

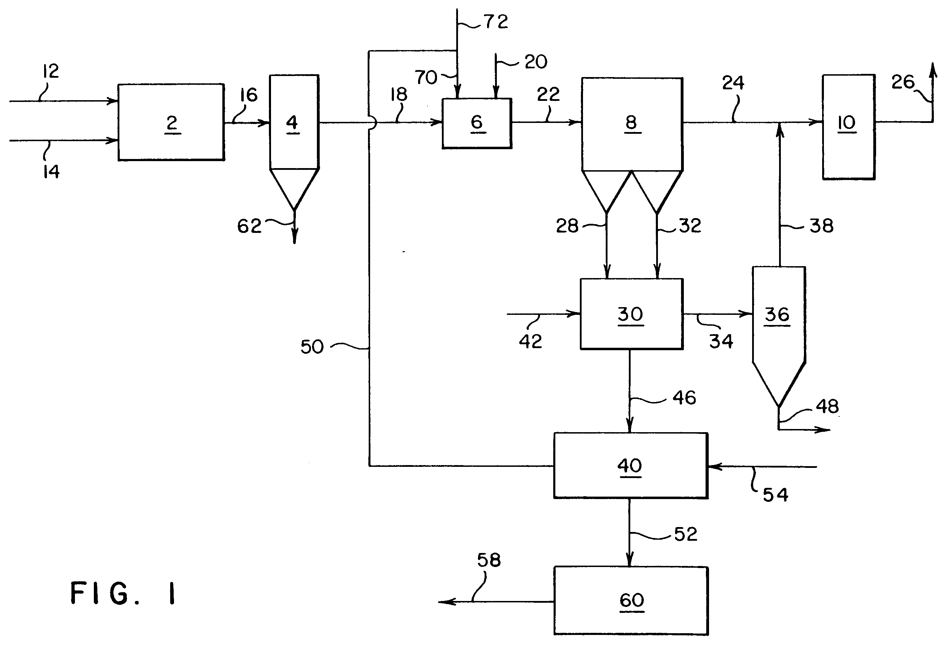

As shown in Figure 1, an exhaust gas source is derived, for example, from boiler 2 which is fed by a stream of coal 12 and air 14. A stream of combustion exhaust gas containing particulate matter, such as fly ash and the oxides of sulfur and nitrogen, flows in duct 16 at a temperature of about 600°F (315°C) to about 900°F (482°C) into a particulate removal device 4, for example, a cyclone, to remove coarse fly ash collected from the gas stream in duct 16. The fly ash collected from the gas in mechanical particulate removal device 4 is removed therefrom by a suitable outlet 62, and fly ash and other particulate matter collected in particulate removal device 4 is discharged as appropriate, for example, to waste.

As indicated above, pre-filtering device 4 is optional. The particulate matter in the combustion exhaust gas stream which is generally less than about 20 μm (microns), is separated from a sorbent, having a particle size of about 20 μm (microns) to about 200 μm (microns), in a classifier located downstream of the entrained bed reactor and of the particulate matter filter, wherein the classifier separates the mixture of solid sorbent having a particle size of about 20 μm (microns) to about 200 μm (microns) and particulate matter having a particle size of less than 20 μm (microns) into relatively coarse solid sorbent which would include relatively coarse particulate matter, such as fly ash, if present, and into relatively fine particulate matter, which is primarily particulate matter, such as fly ash, having a particle size less than 20 μm (microns).

The combustion exhaust gas stream pre-filtered in pre-filtering device 4 passes by any suitable means from pre-filtering device 4 to reactor 6, or alternatively, if there is no pre-filtering device 4, or if pre-filtering device 4 is by-passed, directly from duct 16 to reactor 6.

Reactor 6 is any suitable device wherein a solid material can be entrained in a gas stream flowing through the device. In its simplest form in accordance with the present invention, reactor 6 is merely a duct identical to or similar to ducts 16 and/or 18. It can also be a conduit, a vessel and the like, including any other device or apparatus wherein solids can be injected or passed into a stream of gas passing therethrough and wherein the solids become entrained in the gas stream. The formation of the entrained bed is dependent upon the velocity of the gas stream, for example, a combustion exhaust gas stream, flowing through reactor 6. A simple injector port, pipe or vent 70 can be used to inject solids into the combustion exhaust gas stream in reactor 6 so that they will become entrained therein.

In reactor 6, an entrained bed of sorbent wherein the sorbent is a solid sulfur oxide acceptor dispersed on a finely-divided porous carrier material and wherein the finely-divided porous carrier material has an average particle size of about 20 $\mu$m (microns) to about 200 $\mu$m (microns) when the reactor is not preceded with particulate removal device 4, is formed as explained above. Fresh or make-up sorbent is added to reactor 6 at inlet 72 and 70 where the solid sorbent becomes entrained in the gas stream entering reactor 6 through duct 18, and as explained above.

The gas stream entering reactor 6 must have a velocity which will entrain the solid sorbent injected therein, and accordingly, the velocity of the gas may be any velocity sufficient to form an entrained bed of solid sorbent therein and propel the solid sorbent to a suitable filtering device. The velocity of combustion exhaust gas streams from power plants, diesel engines and other common sources is generally sufficient to form the entrained bed of sorbent in the combustion exhaust gas stream without further assistance.

When the regenerative system is in operation, solid sorbent injected into reactor 6 is primarily derived from regenerated solid sorbent from a regenerator through a suitable conduit 50. This is discussed in more detail below.

Ammonia gas or a precursor capable of forming ammonia gas is also injected into the exhaust gas stream. In Figure 1, ammonia gas injector 20 provides ammonia gas in the combustion exhaust gas stream in reactor 6 where the ammonia gas is also entrained in the combustion exhaust gas stream. In alternative embodiments (not shown) ammonia gas or a precursor capable of forming ammonia gas can be injected into the combustion exhaust gas stream prior to reactor 6, for example, in duct 18 or subsequent to reactor 6, for example, in duct 22. In accordance with the present invention, the particular part of the system in which the ammonia gas or precursor is injected therein, is not critical and can be easily chosen by one skilled in the art.

As the sorbent and ammonia gas become entrained in the combustion exhaust gas stream and travel therewith through reactor 6 and thereafter through duct 22, the ammonia reacts with the $NO_x$ to produce elemental nitrogen and water, and the sulfur oxides react with and/or are absorbed on the sorbent. When the sorbent is copper oxide, the reaction shown above takes place and copper sulfate is formed in the gas stream.

The entrained bed passes through duct 22 into filter 8 where the solid sorbent having reacted and absorbed oxides of sulfur thereon or a mixture of solid sorbent having oxides of sulfur reacted and absorbed thereon and particulate matter, if present, are separated from the combustion exhaust gas stream to form a clean gas which exits filter 8 by means of a suitable duct 24. In preferred embodiments, filter 8 is a high temperature filter suitable for filtering the hot gas, for example, a ceramic or fiber metal filter. In filter 8, any solids which are filtered from the gas stream, also form a filter cake of sorbent which generally contains partially depleted or in certain cases, amounts of filtered reactive sorbent, and the removal of the oxides of sulfur and nitrogen continues in the filter cake in filter 8, thereby assisting in the removal of the oxides of sulfur and nitrogen from the gas stream. In certain embodiments, the entrained bed reactor residence time may be very short and most of the removal of $SO_2$ and $NO_x$ will occur in the filter cake in filter 8.

Clean gas leaving filter 8 in duct 24 proceeds to a clean gas stream exit 26 from the system, for example, an exhaust gas stack. In certain embodiments, an optional air preheater 10 may be placed in the clean gas stream so that clean gas from duct 24 passes through the air preheater 10 before it flows to clean gas stream exit 26. Air preheater 10 may be any conventional heat exchanger which extracts heat from clean gas passing therethrough. Air preheater 10 extracts heat from the combustion exhaust gas stream and provides heat for the air that goes to the boiler, for example, air preheater 10 heats the air provided in stream 14. The clean gas is preferably at a temperature of about 500°F (260°C) to about 1200°F (648°C) in the air preheater.

Filter 8 removes only spent sorbent when pre-filtering device 4 is used to remove all particulate matter from the combustion exhaust gas stream. If pre-filtering device 4, for example a cyclone, removes only relatively coarse particles of particulate matter from the combustion exhaust gas stream, then relatively fine particulate matter may be entrained in the combustion exhaust gas stream in duct 18 which enters reactor 6 and is filtered by filter 8. Further, if pre-filtering device 4 is omitted from the system, or if it is bypassed, then filter 8 removes spent sorbent and particulate matter from the combustion exhaust gas stream where it is collected as filtration solids and may be removed by means of hoppers in conduits 28 and 32.

If a mixture of spent sorbent and particulate matter are collected by filter 8, then the mixture passes through conduits 28 and 32 to classifier 30 where the mixture is separated into relatively coarse but finely-divided solid sorbent and relatively fine particulate matter. As used herein, the solid sorbent is considered finely-divided even though it is the relatively coarse fraction separated from classifier 30.

Classifiers are well-known and well-defined in the art for classifying particles by size from a flue gas stream to produce a quantity of relatively coarse particles and a quantity of relatively fine particles. An example of classification is found in U.S. Patent No. 4,193,972. Generally, in the classifier in accordance with the present invention, the relatively coarse particles are those having an average particle size of about 20 μm (microns) and larger, and relatively fine particles are those having a particle size of less than about 20 μm (microns). Any device well-known in the art which is capable of separating relatively coarse particles from relatively fine particles may be used to classify and separate the relatively coarse particles of finely-divided spent sorbent from the relatively fine particles of particulate matter in accordance with the present invention.

The classifier can also serve as a sorbent heater by using a stream of hot air 42 as a carrier gas to conduct the classified solids, that is, the relatively coarse finely-divided spent sorbent and/or the relatively fine particulate matter in transporting the foregoing from classifier 30. The relatively fine particulate matter is primarily particles of fly ash and is removed from classifier 30 by stream 34 (suitable duct) to filter 36 where the particulate matter can be separated from the carrier gas stream, and the carrier gas stream can be discharged to exhaust by conduit 38 which can be fed to the air preheater 10 in clean gas stream 24 and thereafter to clean gas stream 26. The particulate matter filtered by filter 36, for example, a baghouse, can be removed through conduit 48 and discharged to waste.

The finely-divided spent or loaded sorbent from classifier 30 or the finely-divided spent or loaded sorbent from filter 8 when particulate matter has been pre-filtered by particulate removal device or pre-filtering device 4, passes by suitable conduit 46 to regenerator 40. Thus, when only spent sorbent is present in filter 8, spent sorbent removed by means of suitable conduits 28 and 32 can flow directly into regenerator 40 and bypass classifier 30, or classifier 30 can be omitted from the system.

The spent or loaded sorbent in regenerator 40 is regenerated to form a gas which is rich in sulfur oxides. The gas which is rich in sulfur oxides, for example, a sulfur dioxide-rich gas passes by suitable conduit 52 to sulfur oxide recovery unit 60 where sulfur oxides, for example, sulfur dioxide can be converted into elemental sulfur and/or sulfuric acid which passes from sulfur oxide recovery unit 60 via suitable conduit 58 for recovery. Generally, in accordance with the present invention, the sulfur dioxide rich gas which passes through conduit 52 from regenerator 40 to sulfur oxide recovery unit 60 has a sulfur dioxide content of about 10 percent to about 40 percent by volume.

The finely-divided spent or loaded sorbent, for example spent or loaded copper oxide/copper sulfate-coated porous alumina powder generally has a small copper oxide to copper sulfate ratio due to the reactivity of the sorbent. The spent sorbent is regenerated in regenerator 40 by any conventional method, for example, by using a reducing gas, such as natural gas, methane, ethane, propane and the like as well-known in the prior art and which is shown as entering regenerator 40 by means of stream 54 or by thermal decomposition using hot air at a temperature greater than about 1200°F (648°C) and preferably at a temperature of about 1200°F (648°C) to about 1800°F (982°C). The regenerated sorbent is reinjected into reactor 6 through stream 50 where it becomes entrained in the combustion exhaust gas stream from duct 18.

The foregoing system may be easily adapted for the simultaneous control of the oxides of sulfur, the oxides of nitrogen and particulate matter found in the combustion gases of power plants, diesel engines and industrial boilers and the like.

The following specific examples describe the process and system of the present invention. They are intended for illustrative purposes only and should not be construed as limiting the present invention.

A typical sorbent was made by soaking activated alumina powder having an average particle size of about 20 to about 100 μm (microns) in diameter, in a water-soluble copper salt such as copper nitrate or copper sulfate. The soaking is following by drying and calcining of the powder. The impregnated powder is highly reactive.

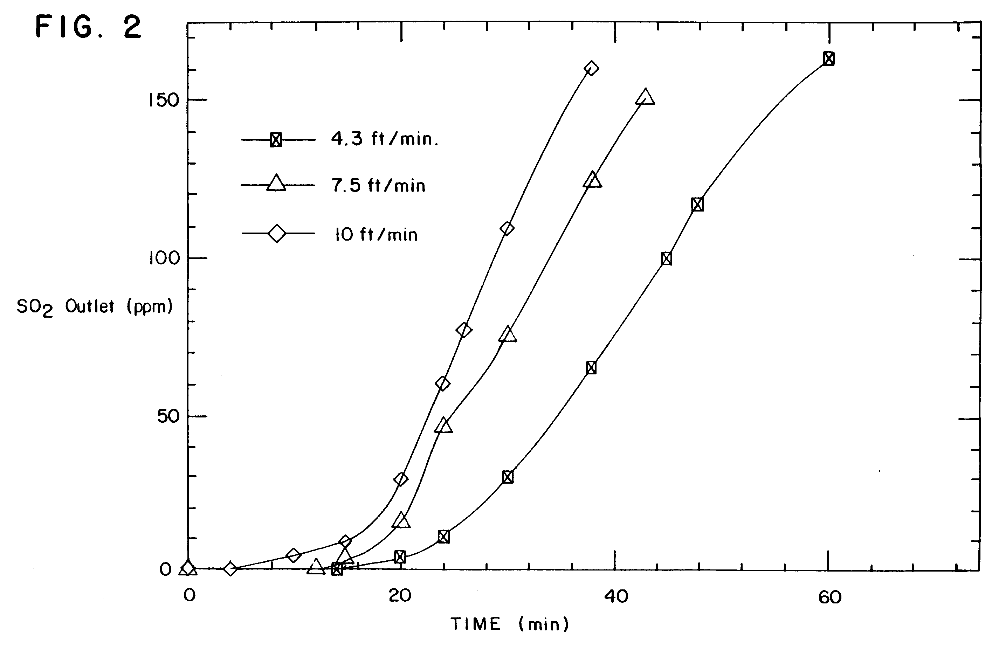

In laboratory fixed bed tests a greater than 99 percent removal efficiency was consistently achieved using a 1mm to 5mm thick cake of powder which was allowed to settle on a high temperature fiber metal filter element, containing about 5.2 percent by weight copper. The inlet concentration of sulfur dioxide was 310 ppmv with temperatures in the range of about 500°F (260°C) to about 800°F (426°C) and a gas velocity in the range of 4.3 ft. (1.31m) per minute to about 15 ft. (4.57m) per minute. Typical test results for the foregoing tests on the filter cake are shown in Figure 2 where the gas velocity was 4.3 ft. (1.31m) per minute, 7.5 ft. (2.29m) per minute and 10 ft. (3.05m) per minute and the cake thickness was 1 mm.

The fixed bed test results shown in Figure 2 illustrates that the existence of copper oxide on a finely-divided (small in diameter), porous alumina powder increases the reactivity and utilization of the copper oxide and that only a short contact time is needed for reaction to occur between the copper oxide-coated powder and ammonia gas injected into the mixture of oxides of sulfur and oxides of nitrogen in a gas stream.

The process of the present invention takes advantage of a short contact time by using the finely-divided copper oxide-coated porous alumina powder in a relatively high velocity gas stream containing the oxides of sulfur, oxides of nitrogen and particulate matter typical of the effluent gases from power plants, diesel motors and the like. The use of an entrained bed of copper oxide-coated, finely-divided porous alumina powder in average particle sizes from about 20 μm (microns) to about 200 μm (microns), in an entrained bed reactor, for example, in a flue gas duct, eliminates the use of large reactor vessels that are conventionally used for the simultaneous removal of oxides of sulfur, oxides of nitrogen and particulate matter.

In another experimental system built to remove oxides of sulfur, oxides of nitrogen and particulate matter from the exhaust gas of a diesel engine, the system included injector means to inject copper oxide coated, finely-divided porous alumina particles having an average particle size of about 20 to about 100 $\mu$m (microns) in diameter, into the exhaust pipe of the diesel engine, as well as an injector to inject ammonia gas into the exhaust pipe. A filter was located downstream of the exhaust pipe to capture particulate matter in the combustion gas as well as the injected finely-divided copper oxide coated alumina particles. Collected particles on the filter downstream of the exhaust pipe were removed from the filter elements by a reverse pulse jet as well-known in the art. The reverse pulse jets were staggered so that about 1/3 of the filter media downstream of the exhaust pipe was cleaned with each pulse. The filter media was made of fiber metal and was built to operate at temperatures up to about 1000°F (538°C). The filter elements in the filter were candle filters with a total of 7.5 sq. ft. (0.697 sq. m) of filter medium. Combustion gas velocity through the filter medium was 8.0 ft. (2.44 m)/min. Conventional detectors were used to measure the inlet concentration of sulfur dioxide and of nitrogen oxides and the outlet concentration of sulfur dioxide and oxides of nitrogen.

The foregoing system operated at the diesel engine exhaust gas temperature of about 700° to about 800°F (about 371° to about 427°C) and a gas flow rate of 60 acfm (air-to-cloth ratio of 8 ft. (2.44 m)/min).

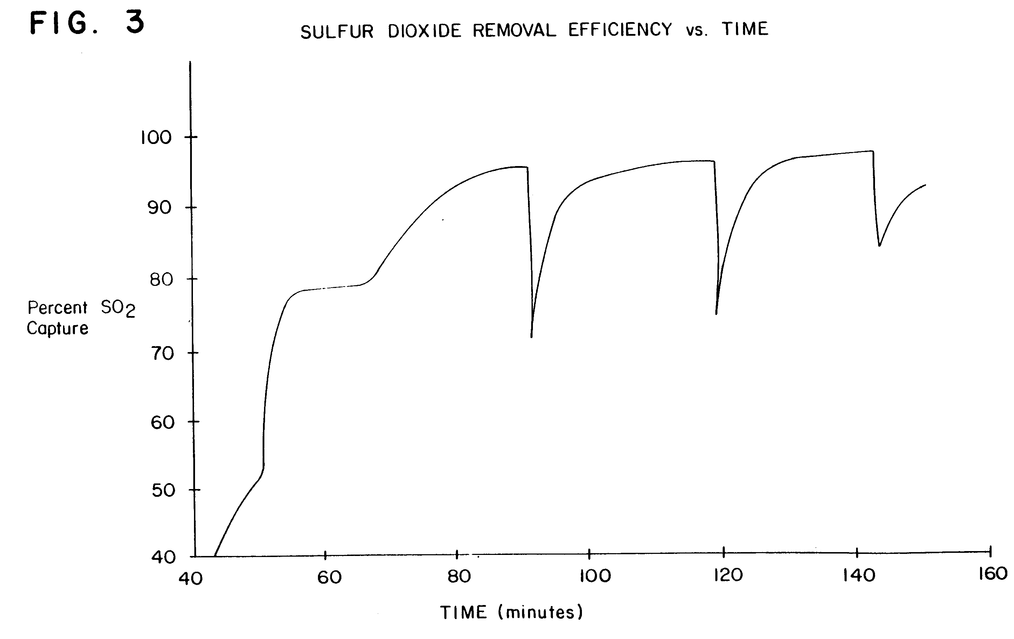

Figure 3 shows the sulfur dioxide removal efficiency as a function of engine running time. The exhaust gas from the diesel engine contained about 210 ppmv sulfur dioxide prior to treatment and after the diesel engine had been running for about 40 minutes, sorbent injection into the exhaust gas stream was initiated. The increased sulfur dioxide removal efficiency with time, as illustrated in Figure 3, was due to an increase in the rate of sorbent injection and to the accumulation of sorbent on the filter elements. Removal efficiency of 95 percent was achieved at about 90 minutes into the run. At about 90 minutes into the run, filter cake was removed from 1/3 of the elements by reversed air pulse jet which resulted in a short duration drop in sulfur dioxide removal efficiency to 70 percent. Efficiency increased in a short duration to about 90 percent to 95 percent after the cleaning. Cleaning cycles, that is, cleaning of the filter cake from 1/3 of the filter elements by reverse air pulse jet, were activated at 120 minutes and 145 minutes into the run resulting in short duration efficiency drops to 75 percent and 85 percent respectively as shown in Figure 3.

Simultaneously with the injection of finely-divided copper oxide-coated porous alumina particles into the exhaust gas of the diesel engine, ammonia gas was injected into the exhaust gas duct. The inlet concentration of the oxides of nitrogen, that is the concentration of the oxides of nitrogen prior to treatment with ammonia gas, was about 600 ppmv. At an ammonia gas/nitrogen oxide ratio of 0.91, a nitrogen oxide ($NO_x$) reduction of up to 87 percent was observed. In view of the fact that 10 percent of the $NO_x$ is at an oxidation state higher than NO, the ammonia slip is believed to be negligible.

The foregoing test shows that a removal efficiency of sulfur dioxide greater than 95 percent can be achieved in a apparatus and process using an entrained bed of finely-divided copper oxide-coated porous alumina particles having a particle size of about 20 to about 100 $\mu$m (microns) used in conjunction with a filter. Higher removal efficiency can be achieved with an increase in CuO to $SO_2$ ratio by increasing the sorbent injection rate and/or by increasing the sorbent residence time in the entrained bed reactor.

While other modifications of the invention and variations thereof which may be employed within the scope of the invention, have not been described, the invention is intended to include such modifications as may be embraced within the following claims.

## Claims

1. A process for simultaneously removing from a combustion exhaust stream, sulfur oxides by means of a solid sulfur oxide acceptor on a porous carrier, nitrogen oxides by means of ammonia gas and particulate matter by means of filtration and for regenerating loaded solid sulfur oxide acceptor, the process comprising:

   (a) forming an entrained bed of highly reactive, solid sulfur oxide acceptor in the combustion exhaust gas stream to deplete sulfur oxides in the combustion exhaust gas stream and thereby convert solid sulfur oxide acceptor to loaded solid sulfur oxide acceptor, the solid sulfur oxide acceptor being dispersed on a highly porous carrier material having a surface area from about $50m^2/g$ to $500m^2/g$ and having a particle size of about 20 $\mu$m micrometers to about 200 $\mu$m (micrometers);
   (b) injecting ammonia gas or a precursor capable of forming ammonia gas into the combustion exhaust gas stream prior to, during or after the formation of the entrained bed of solid sulfur oxide acceptor in the combustion exhaust gas stream to form a gas depleted of nitrogen oxides;
   (c) filtering the gas depleted of sulfur oxides and nitrogen oxides and containing entrained loaded solid sulfur oxide acceptor and any particulate matter, to separate a clean gas from filtration solids comprising loaded solid sulfur oxide acceptor on a porous carrier material and particulate matter;
   (c1) classifying by size the filtration solids of step (c), into particles of loaded solid sulfur oxide acceptor and particulate matter of larger than about 20 micrometers and particulate matter such as fly ash of less than about 20 micrometers;

(d) passing the clean gas to exhaust;

(e) regenerating the loaded solid sulfur oxide acceptor on a porous carrier material from step (c) to form gas having a sulfur dioxide content of about 10 to 40 percent by volume and regenerated solid sulfur oxide acceptor; and

(f) recycling the regenerated solid sulfur oxide acceptor to form the entrained bed of solid sulfur oxide acceptor on a porous carrier in a combustion exhaust gas stream.

2. The process of claim 1, further comprising converting the sulfur dioxide containing gas having a sulphur dioxide content of about 10 to 40 percent by volume to elemental sulfur, sulfuric acid or concentrated sulfur dioxide gas.

3. The process of claim 1 or 2, wherein the combustion exhaust gas stream forming the entrained bed of solid sulfur oxide acceptor has a velocity of about 0.5 ft (0.152m)/sec. to about 20 ft (6.1m)/sec. to form the entrained bed of solid sulfur oxide acceptor therein.

4. The process of any one of the preceding claims, wherein the solid sulfur oxide acceptor on a carrier is copper, copper oxide or mixture thereof coated on porous alumina powder.

5. The process of claim 4, wherein the copper, copper oxide or mixture thereof comprises about 0.1 to about 15 weight percent of the solid sulfur oxide acceptor.

6. The process of any one of the preceding claims, wherein the ammonia is employed in from about a 0.1:1 to about 2.5:1 mole ratio with the nitrogen oxides content of the combustion exhaust gas stream.

7. The process of any one of the preceding claims, wherein the loaded sulfur oxide acceptor is regenerated with heated air at a temperature of about 1200°F (648°C) to about 1800°F (982°C).

8. The process of any one of claim 1 to 6, wherein the loaded sulfur oxide acceptor is regenerated with a heated reducing gas.

9. The process of any one of claims 1 to 8, comprising filtering the combustion exhaust gas stream to remove particulate matter coarser than or about the same size as the solid sulfur oxide acceptor on the porous carrier before forming the entrained bed.

10. The process of any one of claims 1 to 9, wherein an air preheater is used in step (d) of claim 1.

11. The process of claim 10, wherein the clean gas is at a temperature of about 500°F (260°C) to about 1200°F (648°C) in the air preheater.

12. The process of any one of claims 10 to 11, further comprising filtering the particulate matter of the classifying step, other than the loaded solid sulfur oxide acceptor, carried in a stream of gas to separate a second clean gas from the particulate matter and passing the clean gas to exhaust as in step (d) of claim 1.

13. An apparatus for simultaneously removing from a combustion exhaust gas stream, particulate matter by means of a filter, oxides of nitrogen by means of ammonia gas and sulfur oxides by means of a solid sorbent on a porous carrier, and for regenerating the spent solid sorbent on a porous carrier, comprising:

(a) a reactor wherein a solid material can be entrained in a gas stream flowing through it (6);

(b) means (70) for providing a solid sulfur oxide acceptor sorbent in the reactor (6) to form an entrained bed therein, the solid sulfur oxide acceptor being dispersed on a highly porous carrier material having a particle size of about 20 to 200$\mu$m (microns);

(c) means (20) for injecting ammonia gas or a precursor of ammonia gas into the exhaust gas stream;

(d) a filter (8) to separate solid sorbent, particulate matter, or a mixture of solid sorbent and particulate matter from the exhaust gas stream to provide a clean gas stream (24);

(d1) a classifier (30) having means (34,46) to separate a loaded solid sulfur oxide acceptor sorbent from the particulate matter such as fly ash smaller than 20$\mu$m collected on filter (8);

(e) a clean gas stream exit (26) from the apparatus;

(f) means (16,18,22,24) for passing the combustion exhaust gas stream from a combustion exhaust gas source (2), in sequence, to the reactor (6), to the filter (8) and thereafter to the clean gas stream exit (26);

(g) a regenerator (40) for regenerating the solid sorbent dispersed on a porous carrier material;

(h) means (28,32,46) for passing the solid sorbent dispersed on a porous carrier material from the filter (8) to the regenerator (40); and

(i) means (50) for passing the regenerated solid sorbent dispersed on a porous carrier material from the regenerator to the reactor (6).

14. The apparatus according to claim 13, wherein said entrained bed solid sorbent reactor (6) is a duct in the combustion exhaust gas stream (16,18,22).

15. The apparatus according to claim 13 or 14, wherein the filter (8) is a filter which withstands a gas temperature up to 1000°F (538°C).

16. The apparatus according to any one of claims 13 to 15, wherein the means for passing the combustion exhaust gas stream from the combustion exhaust gas source (2) are flue gas ducts (16,18,22,24) sequentially connected from the combustion exhaust gas source (2) to the reactor (6), from the reactor (6) to the filter (8), and from the filter (8) to the clean gas stream exit (26).

17. The apparatus according to any one of claims 13 to 16 wherein said means (70) for providing a solid sulfur oxide acceptor sorbent in the reactor (6) is a solid injector.

18. The apparatus according to any one of claims 13 to 17, wherein the regenerator (40) is a hot, reducing gas-fed regenerator.

19. The apparatus according to any one of claims 13 to 17, wherein the regenerator (40) is a heated air thermal regenerator constructed and arranged to be heated at a temperature of about 1200°F (648°C) to about 1800°F (982°C).

20. The apparatus according to any one of claims 13 to 17, further comprising a particulate removal device (4) upstream of said reactor (6).

21. The apparatus according to claim 20, wherein the particulate removal device (4) is a cyclone separator.

22. The apparatus according to any one of claims 13 to 21, further comprising an air preheater (10) in the clean gas stream (24).

23. The apparatus according to claim 13, further comprising:

    means (36) for removing the particulate matter carried in a stream of gas from the classifier (30) and means (34,38) for passing the stream of gas from the classifier (30) to the clean gas stream exit (26) after removal of the particulate matter therefrom; and
    means (46) for passing the solid sorbent dispersed on a porous carrier material from the classifier (30) directly to the regenerator (40).

24. The apparatus according to claim 23, wherein the means (36) for removing the particulate matter is a filter.

**Patentansprüche**

1. Verfahren zum gleichzeitigen Entfernen von Schwefeloxiden mittels eines festen, Schwefeloxid annehmenden Materials auf einem porösen Träger, Stickstoffoxiden mittels Ammoniakgas und teilchenförmigem Material mittels Filtration aus einem Verbrennungs-Abgas und zum Regenerieren des beladenen festen, Schwefeloxid annehmenden Materials, wobei das Verfahren umfaßt:

    (a) Bilden eines mitgenommenen Bettes aus sehr reaktionsfähigem festem, Schwefeloxid aufnehmendem Material in dem Verbrennungs-Abgasstrom, um diesen Verbrennungs-Abgasstrom an Schwefeloxiden zu verarmen und dadurch das feste, Schwefeloxid aufnehmende Material in mit Schwefeloxid beladenes Material umzuwandeln, wobei das feste, Schwefeloxid aufnehmende Material auf einem sehr porösen Trägermaterial mit einer Oberfläche von etwa 50 $m^2$/g bis 500 $m^2$/g und einer Teilchengröße von etwa 20 $\mu$m bis etwa 200 $\mu$m dispergiert ist;
    (b) Injizieren von Ammoniakgas oder einer zur Bildung von Ammoniakgas fähigen Vorstufe in den Verbrennungs-Abgasstrom vor, während oder nach der Bildung des mitgenommenen Bettes aus festem, Schwefeloxid aufnehmendem Material in dem Verbrennungs-Abgasstrom zur Bildung eines an Stickstoffoxiden verarmten Gases;
    (c) Filtern des an Schwefeloxiden und Stickoxiden verarmten Gases, das das mitgenommene, mit Schwefeloxid beladene Material und irgendwelches, teilchenförmiges Material enthält, um ein sauberes Gas von Filtrations-Feststoffen, die das mit Schwefeloxid beladene, feste Material auf einem porösen Trägermaterial und teilchenförmiges Material umfassen, zu trennen;
    (c1) Klassieren der Filtrations-Feststoffe der Stufe (c) der Größe nach in Teilchen des festen, mit Schwefeloxid beladenen Materials und teilchenförmiges Material von mehr als etwa 20 $\mu$m sowie teilchenförmiges Material, wie Flugasche, von weniger als etwa 20 $\mu$m;
    (d) Leiten des sauberen Gases zu einem Ausgang;
    (e) Regenerieren des mit Schwefeloxid beladenen, festen Materials auf einem porösen Trägermaterial der Stufe (c) zur Bildung von Gas mit einem Gehalt an Schwefeldioxid von etwa 10 bis 40 Vol.-% und regeneriertem, festem Material zur Aufnahme von Schwefeloxid und
    (f) Zurückführen des regenerierten, festen Materials zur Aufnahme von Schwefeloxid zur Bildung des mitgenommenen Bettes aus festem Material zur Aufnahme von Schwefeloxid auf einem porösen Träger in einem Verbrennungs-Abgasstrom.

2. Verfahren nach Anspruch 1, weiter umfassend die Umwandlung des Schwefeldioxid enthaltenden Gases mit einem Gehalt an Schwefeldioxid von etwa 10 bis 40 Vol.-% in elementaren Schwefel, Schwefelsäure oder konzentriertes Schwefeldioxidgas.

3. Verfahren nach Anspruch 1 oder 2, worin der Verbrennungs-Abgasstrom, der das mitgenommene Bett aus festem, Schwefeloxid aufnehmendem Material bildet, eine Geschwindigkeit von etwa 0,152 m (0,5 ft)/s bis etwa 6,1 m (20 ft)/s aufweist, um das mitgenommene Bett aus festem, Schwefeloxid aufnehmendem darin zu bilden.

4. Verfahren nach einem der vorhergehenden Ansprüche, worin das feste, Schwefeloxid aufnehmende Material auf einem Träger Kupfer, Kupferoxid oder eine Mischung davon ist, mit der ein poröses Aluminiumoxid-Pulver überzogen ist.

5. Verfahren nach Anspruch 4, worin das Kupfer, Kupferoxid oder eine Mischung davon etwa 0,1 bis etwa 15 Gew.-% des festen, Schwefeloxid aufnehmenden Materials umfaßt.

6. Verfahren nach einem der vorhergehenden Ansprüche, worin das Ammoniak in einem Molverhältnis von etwa 0,1:1 bis etwa 2,5:1 zu dem Gehalt des Verbrennungs-Abgasstromes an Stickoxiden eingesetzt wird.

7. Verfahren nach einem der vorhergehenden Ansprüche, worin das mit Schwefeloxid beladene Material mit erhitzter Luft bei einer Temperatur von etwa 648°C (1200°F) bis etwa 982°C (1800°F) regeneriert wird.

8. Verfahren nach einem der Ansprüche 1 bis 6, worin das mit Schwefeloxid beladene Material mit einem erhitzten, reduzierenden Gas regeneriert wird.

9. Verfahren nach einem der Ansprüche 1 bis 8, umfassend das Filtrieren des Verbrennungs-Abgasstromes zum Entfernen von teilchenförmigem Material, das gröber ist oder etwa die gleiche Größe hat wie das feste, Schwefeloxid aufnehmende Material auf dem porösen Träger, bevor das mitgenommene Bett gebildet wird.

10. Verfahren nach einem der Ansprüche 1 bis 9, worin in Stufe (d) von Anspruch 1 ein Luftvorerhitzer benutzt wird.

11. Verfahren nach Anspruch 10, worin das saubere Gas in dem Luftvorerhitzer eine Temperatur von etwa 260°C (500°F) bis etwa 648°C (1200°F) hat.

12. Verfahren nach einem der Ansprüche 10 bis 11, weiter umfassend das Filtrieren des teilchenförmigen Materials der Klassierungsstufe, mit Ausnahme des mit Schwefeloxid beladenen, festen Materials, das in einem Gasstrom getragen wird, um ein zweites sauberes Gas von dem teilchenförmigen Material abzutrennen und Leiten des sauberen Gases zu einem Auslaß, wie in Stufe (d) von Anspruch 1.

13. Vorrichtung zum gleichzeitigen Entfernen von teilchenförmigem Material mittels eines Filters, Stickoxiden mittels Ammoniakgas und Schwefeloxiden mittels eines festen Sorptionsmittels auf einem porösen Träger aus einem Verbrennungs-Abgasstrom und zum Regenerieren des verbrauchten, festen Sorptionsmittels auf einem porösen Träger, umfassend:

(a) einen Reaktor (6), in dem ein festes Material in einem durchströmenden Gasstrom mitgenommen werden kann;
(b) eine Einrichtung (70) zur Schaffung eines festen Sorptionsmittels für Schwefeloxid im Reaktor (6) zur Bildung eines mitgenommenen Bettes darin, wobei das feste, Schwefeloxid aufnehmende Material auf einem sehr porösen Trägermaterial dispergiert ist, das eine Teilchengröße von etwa 20 bis 200 $\mu$m aufweist;
(c) eine Einrichtung (20) zum Injizieren von Ammoniakgas oder einer Vorstufe von Ammoniakgas in den Abgasstrom;
(d) einen Filter (8) zum Abtrennen von festem Sorptionsmittel, teilchenförmigem Material oder einer Mischung von festem Sorptionsmittel und teilchenförmigem Material aus dem Abgasstrom zur Schaffung eines sauberen Gasstromes (24);
(d1) eine Klassierungsvorrichtung (30) mit einer Einrichtung (34,46) zum Abtrennen eines festen, beladenen Schwefeloxid-Sorptionsmittels von dem teilchenförmigen Material, wie Flugasche, das kleiner als 20 $\mu$m ist und auf dem Filter (8) gesammelt ist;
(e) einen Auslaß (26) für einen sauberen Gasstrom aus der Vorrichtung;
(f) eine Einrichtung (16,18,22,24), um den Verbrennungs-Abgasstrom nacheinander von einer Quelle (2) für Verbrennungs-Abgas zum Reaktor (6), zum Filter (8) und danach zum Ausgang (26) für den reinen Gasstrom zu leiten;
(g) einen Regenerator (40) zum Regenerieren des auf einem porösen Trägermaterial dispergierten, festen Sorptionsmittels;
(h) eine Einrichtung (28,32,46), um das auf einem porösen Trägermaterial dispergierte, feste Sorptionsmittel vom Filtr (8) zum Regenerator (40) zu überführen und

(i) eine Einrichtung (50), um das auf einem porösen Trägermaterial dispergierte, regenerierte, feste Sorptionsmittel vom Regenerator zum Reaktor (6) zu überführen.

14. Vorrichtung nach Anspruch 13, worin der Reaktor (6) mit dem mitgenommenen Bett aus festem Sorptionsmittel ein Kanal in dem Verbrennungs-Abgasstrom (16,18,22) ist.

15. Vorrichtung nach Anspruch 13 oder 14, worin der Filter (8) ein Filter ist, der einer Gastemperatur von bis zu 538°C (1000°F) widersteht.

16. Vorrichtung nach einem der Ansprüche 13 bis 15, worin die Einrichtung zum Überführen des Verbrennungs-Abgasstromes von der Quelle (2) für Verbrennungs-Abgas Rauchgas-Kanäle (16,16,22,24) sind, die von der Quelle (2) für Verbrennungs-Abgas nacheinander mit dem Reaktor (6), vom Reaktor (6) mit dem Filter (8) und vom Filter (8) mit dem Ausgang (26) für reinen Gasstrom verbunden sind.

17. Vorrichtung nach einem der Ansprüche 13 bis 16, worin die Einrichtung (70) zur Schaffung eines festen Schwefeloxid-Sorptionsmittels im Reaktor (6) ein Feststoff-Injektor ist.

18. Vorrichtung nach einem der Ansprüche 13 bis 17, worin der Regenerator (40) ein heißer Regenerator ist, dem reduzierendes Gas zugeführt wird.

19. Vorrichtung nach einem der Ansprüche 13 bis 17, worin der Regenerator (40) ein thermischer Regenerator für erhitzte Luft ist, der so konstruiert und angeordnet ist, daß er auf eine Temperatur von etwa 648°C (1200°F) bis etwa 982°C (1800°F) erhitzt werden kann.

20. Vorrichtung nach einem der Ansprüche 13 bis 17, weiter umfassend eine Vorrichtung (4) zum Entfernen von teilchenförmigem Material stromauf des Reaktors (6).

21. Vorrichtung nach Anspruch 20, worin die Vorrichtung (4) zum Entfernen von teilchenförmigem Material ein Zyklon-Separator ist.

22. Vorrichtung nach einem der Ansprüche 13 bis 21, weiter umfassend einen Luftvorerhitzer (10) in dem Strom (24) reinen Gases.

23. Vorrichtung nach Anspruch 13, weiter umfassend eine Einrichtung (36) zum Entfernen des teilchenförmigem Materials, das in einem Gasstrom vom Klassierer (30) getragen wird und eine Einrichtung (34,38), um den Gasstrom vom Klassierer (30) zum Ausgang (26) für reinen Gasstrom zu leiten, nachdem das teilchenförmige Material daraus entfernt worden ist und

eine Einrichtung (46), um das auf einem porösen Trägermaterial dispergierte, feste Sorptionsmittel vom Klassierer (30) direkt zum Regenerator (40) zu überführen.

24. Vorrichtung nach Anspruch 23, worin die Einrichtung (36) zum Entfernen des teilchenförmigen Materials ein Filter ist.

**Revendications**

1. Procédé pour éliminer simultanément d'un courant de gaz de combustion rejetés, les oxydes de soufre au moyen d'un agent solide accepteur des oxydes de soufre, fixé sur un support poreux, les oxydes d'azote au moyen de gaz ammoniac et les particules par filtration, et pour régénérer l'agent solide accepteur des oxydes de soufre, chargé, procédé qui comprend les étapes consistant à :

(a) former un lit entraîné d'agent solide accepteur des oxydes de soufre, très réactif, dans le courant de gaz de combústion rejetés, pour appauvrir en oxydes de soufre le courant de gaz de combustion rejetés et transformer ainsi l'agent solide accepteur d'oxydes de soufre en agent solide accepteur d'oxydes de soufre, chargé, l'agent solide accepteur d'oxydes de soufre étant dispersé sur une matière très poreuse servant de support, qui présente une surface spécifique d'environ 50 $m^2$/g à environ 500 $m^2$/g et une taille de particule d'environ 20 $\mu$m (micromètres) à environ 200 $\mu$m (micromètres),

(b) injecter du gaz ammoniac ou un précurseur capable de former du gaz ammoniac dans le courant de gaz de combustion rejetés, avant, pendant ou après la formation du lit entraîné d'agent solide accepteur d'oxydes de soufre dans le courant de gaz de combustion rejetés, pour former un gaz appauvri en oxydes d'azote,

(c) filtrer le gaz appauvri en oxydes de soufre et en oxydes d'azote, et contenant l'agent solide accepteur d'oxydes de soufre, chargé, entraîné, et des particules quelconques, pour séparer par filtration un gaz propre des matières solides comprenant l'agent solide accepteur d'oxydes de soufre, chargé, fixé sur une matière poreuse servant de support, et les particules,

(c1) classer par tailles les solides séparés par filtration dans l'étape (c), en particules d'agent solide accepteur d'oxydes de soufre, chargé, et autres particules ayant une taille supérieure à environ 20 $\mu$m et en particules telles que les cendres volatiles, ayant une taille inférieure à environ 20 μm,

(d) rejeter le gaz propre à l'extérieur,

(e) régénérer l'agent solide accepteur d'oxydes de soufre, chargé, fixé sur une matière poreuse servant de support, provenant de l'étape (c), pour former un gaz ayant une teneur en dioxyde de soufre d'environ 10 % à environ 40 % en volume et de l'agent solide accepteur d'oxydes de soufre, régénéré, et

(f) recycler l'agent solide accepteur d'oxydes de soufre, régénéré, pour former le lit entraîné d'agent solide accepteur d'oxydes de soufre, fixé sur un support poreux, dans un courant de gaz de combustion rejetés.

2. Procédé selon la revendication 1, qui comprend en outre l'étape consistant à transformer le gaz contenant du dioxyde de soufre, ayant une teneur en dioxyde de soufre d'environ 10 % à environ 40 % en volume, en soufre élémentaire, en acide sulfurique ou en dioxyde de soufre concentré gazeux.

3. Procédé selon la revendication 1 ou 2, dans lequel le courant de gaz de combustion rejetés où est formé le lit entraîné d'agent solide accepteur d'oxydes de soufre, a une vitesse d'environ 0,5 pied (0,152 m)/s à environ 20 pieds (6,1 m)/s, pour la formation en son sein du lit entraîné d'agent solide accepteur d'oxydes de soufre.

4. Procédé selon l'une quelconque des revendications précédentes, dans lequel l'agent solide accepteur d'oxydes de soufre, fixé sur un support, est du cuivre, de l'oxyde de cuivre ou un mélange de ces produits, appliqué sur de la poudre d'alumine poreuse.

5. Procédé selon la revendication 4, dans lequel le cuivre, l'oxyde de cuivre ou leur mélange représente environ 0,1 % en poids à environ 15 % en poids de l'agent solide accepteur d'oxydes de soufre.

6. Procédé selon l'une quelconque des revendications précédentes, dans lequel on utilise l'ammoniac selon un rapport molaire d'environ 0,1:1 à environ 2,5:1 par rapport aux oxydes d'azote contenus dans le courant de gaz de combustion rejetés.

7. Procédé selon l'une quelconque des revendications précédentes, dans lequel on régénère l'agent accepteur d'oxydes de soufre, chargé, par de l'air chauffé à une température d'environ 1200°F (648°C) à environ 1800°F (982°C).

8. Procédé selon l'une quelconque des revendications 1 à 6, dans lequel on régénère l'agent accepteur d'oxydes de soufre, chargé, par un gaz réducteur chauffé.

9. Procédé selon l'une quelconque des revendications 1 à 8, qui comprend la filtration du courant de gaz de combustion rejetés, pour éliminer les particules plus grosses ou ayant environ la même taille que l'agent solide accepteur d'oxydes de soufre, fixé sur le support poreux, avant la formation du lit entraîné.

10. Procédé selon l'une quelconque des revendications 1 à 9, dans lequel on utilise un préchauffeur à air dans l'étape (d) de la revendication 1.

11. Procédé selon la revendication 10, dans lequel le gaz propre est à une température d'environ 500°F (260°C) à environ 1200°F (648°C) dans le préchauffeur à air.

12. Procédé selon l'une quelconque des revendications 10 et 11, qui comprend en outre la séparation par filtration des particules de l'étape de classification, autres que l'accepteur solide d'oxydes de soufre, chargé, transportées par le courant de gaz, pour séparer un second gaz propre des particules, et le rejet du gaz propre à l'extérieur comme dans l'étape (d) de la revendication 1.

13. Appareil pour éliminer simultanément d'un courant de gaz de combustion rejetés, des particules au moyen d'un filtre, les oxydes d'azote au moyen de gaz ammoniac et les oxydes de soufre au moyen d'un sorbant solide, fixé sur un support poreux, et pour régénérer le sorbant solide usé, fixé sur un support poreux, qui comprend :

(a) un réacteur (6) au sein duquel une matière solide peut être entraînée dans un courant gazeux traversánt le réacteur,

(b) des moyens (70) pour introduire un sorbant solide accepteur d'oxydes de soufre dans le réacteur (6), pour former un lit entraîné dans le réacteur, l'agent solide accepteur d'oxydes de soufre étant dispersé sur une matière très poreuse servant de support, qui a une taille de particule d'environ 20 à environ 200 μm (micromètres),

(c) des moyens (20) pour injecter du gaz ammoniac ou un précurseur de gaz ammoniac dans le courant de gaz rejetés,

(d) un filtre (8) pour séparer le sorbant solide, les particules ou un mélange de sorbant solide et de particules du courant de gaz rejetés, pour fournir un courant de gaz propre (24),

(d1) un classificateur (30) possédant des moyens (34, 46) pour séparer le sorbant solide accepteur d'oxydes de soufre, chargé, des particules telles que les cendres volatiles, ayant une taille inférieure à 20 μm, recueillies sur le filtre (8),

(e) un conduit (26) pour la sortie du courant de gaz propre de l'appareil,

(f) des moyens (16, 18, 22, 24) pour envoyer le courant de gaz de combustion rejetés, provenant d'une source (2) de gaz de combustion rejetés, successivement au réacteur (6), au filtre (8) et ensuite à la sortie (26) du courant de gaz propre,

(g) un régénérateur (40) pour régénérer le sorbant solide dispersé sur une matière poreuse servant de support,

(h) des moyens (28, 32, 46) pour faire passer le sorbant solide dispersé sur une matière poreuse servant de support, du filtre (8) au régénérateur (40), et

(i) des moyens (50) pour faire passer le sorbant solide régénéré, dispersé sur une matière poreuse servant de support, du régénérateur au réacteur (6).

14. Appareil selon la revendication 13, dans lequel ledit réacteur (6) à lit entraîné de sorbant solide est une conduite placée dans le circuit (16, 18, 22) du courant de gaz de combustion rejetés.

15. Appareil selon la revendication 13 ou 14, dans lequel le filtre (8) est un filtre qui supporte une température du gaz atteignant 1000°F (538°C).

16. Appareil selon l'une quelconque des revendications 13 à 15, dans lequel les moyens pour l'écoulement du courant de gaz de combustion rejetés, provenant de la source (2) de gaz de combustion rejetés, sont des conduites (16, 18, 22, 24) de gaz de combustion, allant successivement de la source (2) de gaz de combustion rejetés au réacteur (6), du réacteur (6) au filtre (8) et du filtre (8) à la sortie (26) du courant de gaz propre.

17. Appareil selon l'une quelconque des revendications 13 à 16, dans lequel lesdits moyens (70) pour l'introduction du sorbant solide accepteur d'oxydes de soufre dans le réacteur (6), sont constitués d'un dispositif d'injection de solide.

18. Appareil selon l'une quelconque des revendications 13 à 17, dans lequel le régénérateur (40) est un régénérateur alimenté par un gaz réducteur chaud.

19. Appareil selon l'une quelconque des revendications 13 à 17, dans lequel le régénérateur (40) est un régénérateur thermique à air chauffé, construit et conçu pour être chauffé à une température d'environ 1200°F (648°C) à environ 1800°F (982°C).

20. Appareil selon l'une quelconque des revendications 13 à 17, qui comprend en outre un dispositif (4) d'élimination des particules, situé en amont dudit réacteur (6).

21. Appareil selon la revendication 20, dans lequel le dispositif (4) d'élimination des particules est un séparateur à cyclone.

22. Appareil selon l'une quelconque des revendications 13 à 21, qui comprend en outre un préchauffeur à air (10), placé dans le courant (24) de gaz propre.

23. Appareil selon la revendication 13, qui comprend en outre :

des moyens (36) pour éliminer les particules entraînées dans un courant de gaz issu du classificateur (30) et des moyens (34, 38) pour faire passer le courant de gaz du classificateur (30) à la sortie (26) du courant de gaz propre, après élimination des particules dudit courant de gaz, et

des moyens (46) pour faire passer le sorbant solide, dispersé sur une matière poreuse servant de support, du classificateur (30) directement au régénérateur (40).

24. Appareil selon la revendication 23, dans lequel les moyens (36) pour éliminer les particules sont constitués d'un filtre.

FIG. 1

EP 0 504 476 B1

FIG. 2

SO$_2$ Outlet (ppm)

TIME (min)

4.3 ft/min.

7.5 ft/min

10 ft/min

# FIG. 3

## SULFUR DIOXIDE REMOVAL EFFICIENCY vs. TIME

Percent SO$_2$ Capture

TIME (minutes)

EP 0 504 476 B1